# EUROPEAN PATENT APPLICATION

(11) **EP 4 494 907 A1**
(43) Date of publication of application: **22.01.2025**
(21) Application number: 22931806.8
(22) Date of filing: 22.11.2022
(51) Int. Cl.: B60K 1/04, B60L 50/00, H01M 50/244, H01M 50/249, H01M 50/264

(54) **VEHICLE-MOUNTED BATTERY PACK LOCKING SYSTEM, METHOD AND DEVICE, AND STORAGE MEDIUM**

(30) Priority: 15.03.2022 CN 202210255679
(71) Applicant: Shanghai Westwell Technology Co., Ltd., Shanghai 200050 (CN); SHANGHAI KEWE TECHNOLOGY CO., LTD., Shanghai 201306 (CN)
(72) Inventor: TAN, Limin, Shanghai 200050 (CN); JIANG, Hua, Shanghai 200050 (CN); HAN, Yanwei, Shanghai 200050 (CN); ZHANG, Hongbo, Shanghai 200050 (CN)
(74) Representative: De Vries & Metman
(86) International application number: PCT/CN2022/133466
(87) International publication number: WO 2023/173795

(57) **Abstract**

A vehicle-mounted battery pack locking system, method and device, and a storage medium. The vehicle-mounted battery pack locking system comprises: a battery swap channel, which enables a battery pack (4) to enter and exit, in a first direction, a battery position (2) of a vehicle (1) to be subjected to battery swapping, wherein at least one second wedge-shaped block (42) is respectively arranged on two ends of the battery pack (4), and a wedge-shaped slope surface of the second wedge-shaped block (42) extends in the first direction; and at least two locking assemblies (3), which are respectively arranged at two ends of the battery position (2) in the first direction, wherein each of the locking assemblies (3) at least comprises a limiting slide block (32) and a first wedge-shaped block (31), the limiting slide block (32) is limited to linearly move only in the first direction, the first wedge-shaped block (31) is connected to one side of the limiting slide block (32), limiting slide blocks (32) located at two ends are respectively pushed to the battery pack (4) by means of a bias force, and the wedge-shaped slope surface of the first wedge-shaped block (31) is respectively attached to and self-locked with the corresponding second wedge-shaped block (42), so as to perform bidirectional limiting on the battery pack (4) in the first direction. By using the vehicle-mounted battery pack locking system and method, spatial locking can be performed on a battery pack, dual-locking protection is provided in the insertion direction of the battery pack, and the requirement of quick opening and the effect of strong locking are met.

## Description

### TECHNICAL FIELD

The present disclosure relates to the field of battery swap for large new energy vehicles, and more particularly to a vehicle-mounted battery pack locking system, a method, a device and a storage medium.

### BACKGROUND

In a battery swap station system, after the battery pack is swapped, the battery pack needs to be locked to be prevented from moving, but the battery pack also needs to be able to be unlocked and locked quickly. Some existing locking devices have complex structures and complicated operations, which cannot be unlocked quickly. Some existing locking devices require a large space, don't have enough strength, and are easy to loosen. Furthermore, most locking devices lack double protection.

Especially in the battery swap scenario currently used in large trucks and other heavy new energy vehicles, the battery pack is very heavy. If the battery pack cannot be stably fixed in the car, once the battery pack needs to be swapped, the center of gravity of the vehicle will be affected and the stability of the driving state (especially when turning or accelerating) will be destroyed. In severe cases, driving safety will be affected.

### SUMMARY

Concerning the problems in the prior art, the purpose of the present disclosure is to provide a vehicle-mounted battery pack locking system, a method, a device and a storage medium, to overcome the difficulties of the prior art, spatially lock the battery pack, and provide double locking protection in the insertion direction of the battery pack, which can not only be unlocked quickly, but also provide a strong locking effect.

An embodiment of the present disclosure provides a vehicle-mounted battery pack locking system including:
a battery swap passage for a battery pack to enter and exit a battery position of a battery swap vehicle along a first direction, wherein at least one second wedge block is provided at each of two ends of the battery pack, and a wedge-shaped slope of the second wedge block is configured to extend along the first direction; and
at least two locking assemblies respectively arranged at two ends of the battery position along the first direction, wherein each locking assembly at least includes one limit slider and a first wedge block, the limit slider is limited to be linearly movable only along the first direction, the first wedge block is connected to one side of the limit slider, the limit sliders at the two ends of the battery position are pushed toward the battery pack by a bias force, and a wedge-shaped slope of each first wedge block is respectively fitted and self-locked with the corresponding second wedge block, to bidirectionally limit the position of the battery pack along the first direction.

In some embodiments, a group of connecting rods arranged parallel to the first direction are provided at a bottom portion of the battery pack, and the second wedge blocks are respectively provided at two ends of each connecting rod, the slope of the second wedge block faces upward, and the slope of the first wedge block faces downward, the slope of the first wedge block is in surface contact with the slope of the second wedge block to fit together for self-locking, a locking force of the limit slider along the first direction is converted into a downward pressure that presses the battery pack against a bottom plate of the battery position, so that the battery pack is limited to the battery position between the second wedge blocks at the two ends of the battery position, and the first direction is a width direction of the battery swap vehicle.

In some embodiments, the locking assembly further includes linear limit assemblies respectively arranged on the locking assemblies and a vehicle body of the battery swap vehicle.

In some embodiments, the linear limit assembly includes a dovetail groove arranged at a bottom portion of the limit slider and a dovetail tenon fixed at the battery position in the vehicle body, and the dovetail groove is slidable in the dovetail tenon along the first direction.

In some embodiments, the locking assembly further includes a cylinder configured to drive the limit slider to move along the first direction through a cylinder rod.

In some embodiments, the locking assembly further includes a spring configured to push the limit slider toward the second wedge block of the battery pack, wherein the spring and the cylinder are respectively arranged on two sides of the limit slider along the first direction.

In some embodiments, when the cylinder overcomes a thrust of the spring and pushes the limit slider away from the second wedge block, the battery position is in an unlocked state for inserting or removing the battery pack.

In some embodiments, when the cylinder pulls the limit slider toward the second wedge block, the cylinder and the spring together provide a combined force to limit the battery pack.

In some embodiments, the limit sliders are respectively located on outer sides of the connecting rods, the first wedge blocks are respectively located on inner sides of the limit sliders, and moving strokes of the first wedge blocks are respectively located on extension lines of the two ends of the connecting rods.

The present disclosure further provides a vehicle-mounted battery pack locking method realized by the vehicle-mounted battery pack locking system, wherein the method includes:
limiting the battery pack to the battery position by a guide member extending along a vertical direction;
the first wedge blocks of the locking assemblies overcoming the bias force and respectively separating from the second wedge blocks at the two ends of the battery pack to unlock the battery pack;
lifting the battery pack to separate from the battery position;
placing another battery pack into the battery position; and
pressing the first wedge blocks of the locking assemblies against the second wedge blocks at the two ends of the battery pack, and limiting the battery pack to the battery position together with the bias force.

The embodiment of the present disclosure further provides a vehicle-mounted battery pack locking device including:
a processor;
a memory configured to store executable instructions of the processor;
wherein the processor is configured to execute the steps of the vehicle-mounted battery pack locking method by executing the executable instructions.

The embodiment of the present disclosure further provides a computer-readable storage medium used for storing program, wherein the vehicle-mounted battery pack locking method is realized when the program is executed by a processor.

The purpose of the present disclosure is to provide a vehicle-mounted battery pack locking system, a method, a device and a storage medium, to spatially lock the battery pack and provide double locking protection in the insertion direction of the battery pack, which can not only be unlocked quickly, but also provide a strong locking effect.

### BRIEF DESCRIPTION OF THE DRAWINGS

The foregoing and other features, and advantages of the present disclosure are apparent from the following detailed description taken in conjunction with the accompanying drawings.
FIG. 1 is a schematic view of a vehicle-mounted battery pack locking system of the present disclosure.
FIG. 2 is a schematic view of the vehicle-mounted battery pack locking system and a battery pack in an unlocked state of the present disclosure.
FIG. 3 is an enlarged view of A area in FIG. 2.
FIG. 4 is a schematic view of the vehicle-mounted battery pack locking system and a battery pack in a locked state of the present disclosure.
FIG. 5 is an enlarged view of B area in FIG. 4.
FIG. 6 is a flow chart of a vehicle-mounted battery pack locking method of the present disclosure.
FIG. 7 is a structural schematic view of a vehicle-mounted battery pack locking device of the present disclosure.
FIG. 8 is a structural schematic view of a computer-readable storage medium according to an embodiment of the present disclosure.

### DETAILED DESCRIPTION

The following describes the implementation methods of the present disclosure through specific examples. Those skilled in the art can easily understand other advantages and effects of the present disclosure from the contents disclosed in the present disclosure. The present disclosure may also be implemented or applied through other specific implementation methods, and the details in the present disclosure may also be modified or changed in various ways according to different viewpoints and disclosure systems without departing from the spirit of the present disclosure. It should be noted that, in the absence of conflict, the embodiments and features in the embodiments of the present disclosure may be combined with each other.

The following is a detailed description of the embodiments of the present disclosure with reference to the accompanying drawings, for those skilled in the art of the present disclosure to easily implement. The present disclosure can be embodied in many different forms and is not limited to the embodiments described herein.

In the description of the present disclosure, terms such as "one embodiment", "some embodiments", "example", "specific example", or "some examples" means that the specific features, structures, materials or characteristics described in combination with the embodiment or example are included in at least one embodiment or example of the present disclosure. Furthermore, the particular features, structures, materials, or characteristics shown may be combined in any suitable manner in any one or more embodiments or examples. Furthermore, those skilled in the art may combine and associate different embodiments or examples and features of different embodiments or examples described in the present disclosure without mutual contradiction.

In addition, the terms "first" and "second" are used for descriptive purposes only and cannot be understood as indicating or implying relative importance or implicitly indicating the quantity of the indicated technical features. Therefore, features defined as "first" or "second" may explicitly or implicitly refer to at least one of these features. In the description of the present disclosure, "multiple" means two or more, unless the number is clearly and specifically defined.

To clearly describe the present disclosure, components not relative to the description are omitted, and the same reference numbers are used for the same or similar components throughout the description.

Throughout the specification, when a certain device is described as be "connected" to another device, the connection may not only be "direct connection" but also "indirect connection" with other elements interposed therebetween. Furthermore, when a certain device is described as "including" a certain component, unless otherwise stated, the description does not exclude other components but means that other components may also be included.

When a certain device is "on" another device, the certain device may be directly on the other device, or other devices may be interposed therebetween. By comparison, when a device is referred to as being "directly on" another device, there are no intervening devices.

Although the terms first, second, etc. are used herein to refer to various elements in some examples, these elements should not be limited by these terms. These terms are only used to distinguish one element from another. For example, a first interface and a second interface are indicated. Furthermore, as used herein, the singular forms "a", "an" and "the" are intended to include the plural forms as well, unless the context indicates otherwise. It should be further understood that the terms "comprises" and "includes" indicate the existence of features, steps, operations, elements, components, items, types, and/or groups, but do not exclude the existence, occurrence, or addition of one or more other features, steps, operations, elements, components, items, types, and/or groups. The terms "or" and "and/or" used herein are to be interpreted as inclusive, or including any one or any combination. Thus, "A, B or C" or "A, B and/or C" means "any of the following: A; B; C; A and B; A and C; B and C; A, B and C." An exception to this definition only occurs when a combination of elements, functions, steps or operations are inherently mutually exclusive in some cases.

The technical terms used herein are only used to refer to specific embodiments and are not intended to limit the present disclosure. The singular form used herein also includes the plural form unless the description clearly indicates otherwise. The term "comprising" as used in the description means to specify certain characteristics, regions, integers, steps, operations, elements and/or components, but does not exclude the existence or addition of other characteristics, regions, integers, steps, operations, elements and/or components.

Although not defined differently, all terms, including technical and scientific terms used herein, have the same meaning as generally understood by one of those skilled in the art of the present disclosure. Terms defined in commonly used dictionaries are additionally interpreted as having a meaning consistent with the content of the relevant technical literature and the current disclosure, and unless otherwise defined, shall not be overly interpreted as having an ideal or very formal meaning.

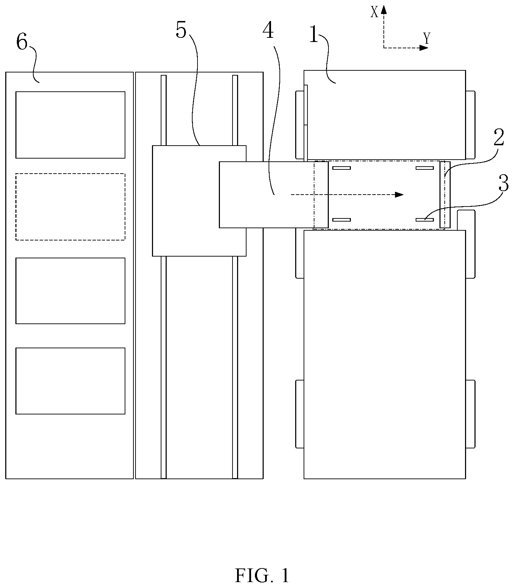

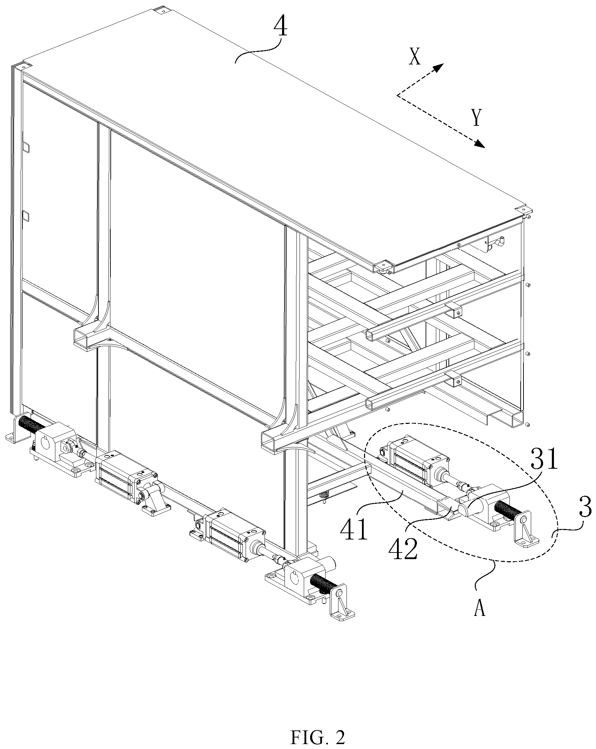

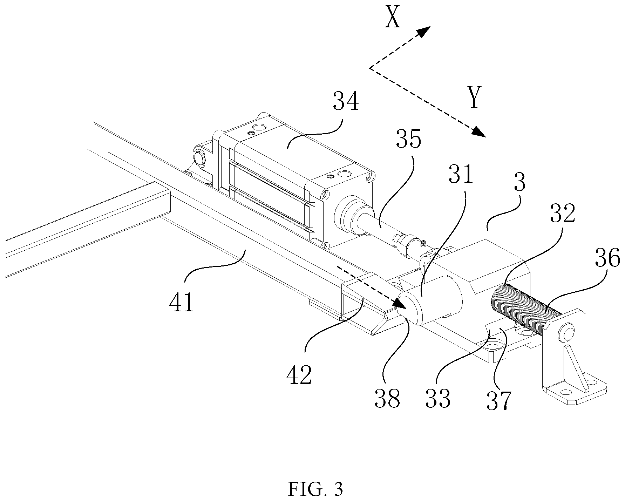

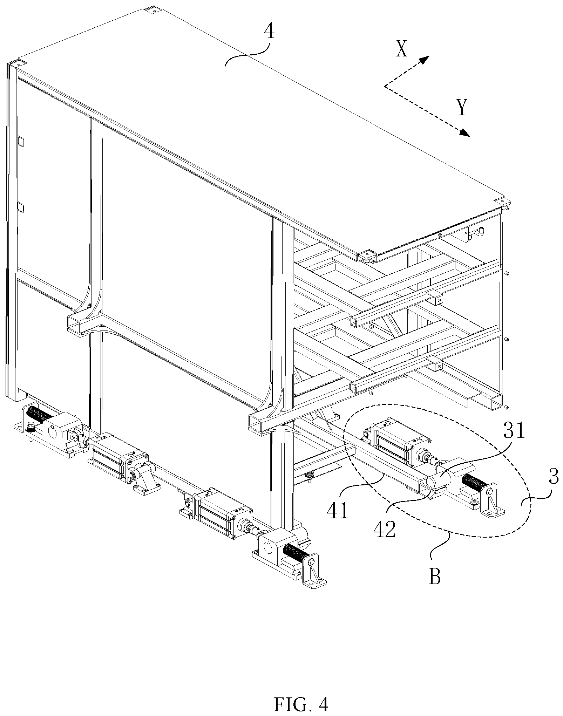

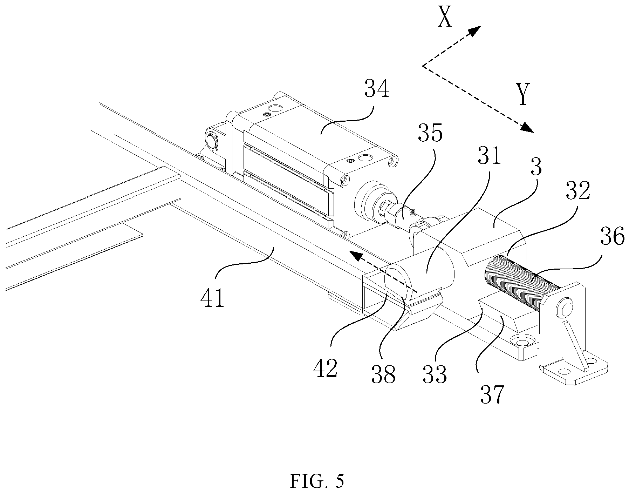

FIG. 1 is a schematic view of a vehicle-mounted battery pack locking system of the present disclosure. FIG. 2 is a schematic view of the vehicle-mounted battery pack locking system and a battery pack in an unlocked state of the present disclosure. FIG. 3 is an enlarged view of A area in FIG. 2. FIG. 4 is a schematic view of the vehicle-mounted battery pack locking system and a battery pack in a locked state of the present disclosure. FIG. 5 is an enlarged view of B area in FIG. 4. As shown in FIGS. 1-5, the vehicle-mounted battery pack locking system of the present disclosure is particularly suitable for large new energy vehicles equipped with large battery packs. The vehicle-mounted battery pack locking system includes: a battery swap passage and at least two locking components 3. The battery swap passage allows the battery pack 4 to enter and exit the battery position 2 of the battery swap vehicle 1 along a first direction. A group of connecting rods 41 parallel to the first direction are arranged at the bottom of the battery pack 4. At least one second wedge block 42 is provided at each of two ends of each connecting rod 41. The wedge-shaped slope of the second wedge block 42 extends along the first direction. Four locking assemblies 3 are respectively arranged at two ends of the battery position 2 along the first direction. Each locking assembly 3 at least includes a first wedge block 31, a limit slider 32 and a linear limit assembly respectively arranged on the locking assembly 3 and a vehicle body of the battery swap vehicle 1. The limit slider 32 is limited to linearly moveable only along the first direction. The first wedge block 31 is connected to one side of the limit slider 32. The limit sliders 32 at the two ends are respectively pushed toward the battery pack 4 by a bias force. The wedge-shaped slope 38 of the first wedge block 31 is respectively fitted and self-locked with the corresponding second wedge block 42, to bidirectionally limit the position of the battery pack along the first direction. A second wedge block 42 is respectively provided at each of the two ends of each connecting rod 41, the slope surface of the second wedge block 42 faces upward, the slope surface of the first wedge block 31 faces downward, and the first direction is a width direction of the battery-swap vehicle 1. The slope surface of the first wedge block 31 and the slope surface of the second wedge block 42 are in surface contact and self-locked with each other, converting a locking force of the limit slider 32 along the first direction into a downward pressure that presses the battery pack 4 against a bottom plate of the battery position 2, thereby limiting the battery pack 4 to the battery position 2 between the second wedge blocks 42 at the two ends. The first direction is the width direction of the battery swap vehicle 1. The linear limit assembly includes a dovetail groove 33 arranged at a bottom portion of the limit slider 32 and a dovetail tenon 37 fixed in the battery position 2 in the vehicle body. The dovetail groove 33 is slidable in the dovetail tenon 37 along a first direction. The first direction (Y direction, a width direction of the vehicle body) is perpendicular to the length direction (X direction, a length direction of the vehicle body) of the battery-swap vehicle 1. When swapping the battery pack through the vehicle-mounted battery pack locking system of the present disclosure, a battery swap robot 5 takes out the battery pack 4 from a container battery compartment 6, and inserts the battery pack 4 into the battery position 2 of the battery swap vehicle 1 along the width direction of the vehicle body, and firmly locks the battery pack 4 in the battery position 2 with the locking assembly 3 to prevent the battery pack from shaking in the vertical direction, the length direction and the width direction of the vehicle when the vehicle is driving. Wherein, the present disclosure can prevent the limit slider 32 from moving in the vertical direction and the length direction of the vehicle through the cooperation between the dovetail groove 33 at the bottom portion of the limit slider 32 and the dovetail tenon 37 fixed to the battery position 2 in the vehicle body, in combination with the bias force and the self-locking between the wedge slope 38 of the first wedge block 31 and the second wedge block 42. The wedge angle of the wedge slope 38 and the slope of the second wedge block 42 in the present disclosure ranges from 3° to 6° (but not limited to this). The mutual cooperation of the two wedge surfaces at such an angle realizes a self-locking function, thereby effectively preventing the limit slider 32 from moving in the width direction of the vehicle, thereby realizing the spatial locking of the battery pack 4.

In a selective embodiment, when the cylinder 34 pulls the limit slider 32 toward the second wedge block 42, the cylinder 34 and the spring 36 together provide a combined force to limit the battery pack 4, but the present disclosure is not limited to this.

In a selective embodiment, the locking assembly 3 further includes a cylinder 34 configured to drive the limit slider 32 to move along the first direction through a cylinder rod 35. The locking assembly 3 further includes a spring 36 for pushing the limit slider 32 toward the second wedge block 42 of the battery pack 4. The spring 36 and the cylinder 34 are respectively distributed on two sides of the limit slider 32 along the first direction. Through the mutual cooperation between the wedge-shaped slope 38 of the first wedge block 31 and the slope of the second wedge block 42, the real-time locking force of the limit slider 32 along the first direction (which can be a combined force provided by the cylinder 34 and the spring 36 to limit the battery pack 4, or only the thrust of the limiting battery pack 4 provided by the spring 36) is converted into a downward pressure that presses the battery pack 4 against the bottom plate of the battery position 2. In the present disclosure, the first wedge block 31 can firmly press the first wedge block 31 through the mechanical power of the cylinder 34 and the biasing force provided by the spring 36, thereby realizing a double locking function. In this embodiment, due to the mutual cooperation between the first wedge block 31 and the second wedge block 42, when the cylinder 34 further increases the pulling force on the limit slider 32, the cooperation between the wedge blocks will provide a greater downward pressure to the battery pack 4, ensuring that the battery pack 4 is fixed in the battery position 2.

In a selective embodiment, when the cylinder 34 overcomes the thrust of the spring 36 and pushes the limit slider 32 away from the second wedge block 42, the battery position 2 is in an unlocked state for inserting or removing the battery pack 4, but the present disclosure is not limited to this.

In a selective embodiment, the limit sliders 32 are located on outer sides of the connecting rods 41, the first wedge blocks 31 are located on inner sides of the limit sliders 32, and moving strokes of the first wedge blocks 31 are located on extension lines of the two ends of the connecting rods 41, but the present disclosure is not limited to this.

In a selective embodiment, the battery position 2 is further provided with at least two positioning guide rods (not shown in the drawings) extending vertically upward, and the battery pack 4 is first positioned in the vertical direction through the cooperation of vertical through holes (not shown in the drawings) of the battery pack 4 and the positioning guide rods, and then falls to the bottom of the battery position 2, and then the limit sliders 32 on two sides of the bottom of the battery position 2 clamp the second wedge block 42 after being horizontally moved to fix the horizontal position of the battery pack 4. Through the cooperation among the vertical through holes, the positioning guide rods, the limit sliders 32 and the second wedge block 42, the battery pack 4 is completely fixed on the battery position 2 in the three-dimensional directions. At this time, the displacement of the battery pack 4 in each of the three-dimensional directions relative to the battery position 2 is 0.

The vehicle-mounted battery pack locking system of the present disclosure can spatially lock the battery pack and provide double locking protection in the insertion direction of the battery pack, which can not only be unlocked quickly, but also provide a strong locking effect. The cylinder 34 can drive the first wedge block 31 to perform a single reciprocating motion along the dovetail groove 33. The dovetail groove 33 not only guides the first wedge block 31, but also can bear a lateral force to prevent the first wedge block 31 from separating from the dovetail groove 33. Furthermore, under the action of the cylinder 34, the first wedge block 31 and the second wedge block 42 fit closely together, thus locking the battery pack. The wedge clamping structure is widely applied as having a simple structure, a large force amplification ratio and a good self-locking performance. When the cylinder 34 fails and cannot provide the pulling force, the first wedge block 31 can still firmly press the second wedge block 42 under the rebound force of the spring 36 (for example, a compression spring). Therefore, the system has a double locking function.

Based on the above technical features, the vehicle-mounted battery pack locking system of the present disclosure has the following advantages.
1. The system needs simple power as being driven by a cylinder.
2. The structure is simple and arranged horizontally, requiring little mounting space.
3. The dovetail groove design is adopted to effectively prevent loosening.
4. The action is simple and the battery pack is locked with a single horizontal movement.
5. Double protection is adopted, that is, a mechanical locking mechanism is added. Even if the cylinder fails, the battery pack can still be locked through the rebound force of the spring.

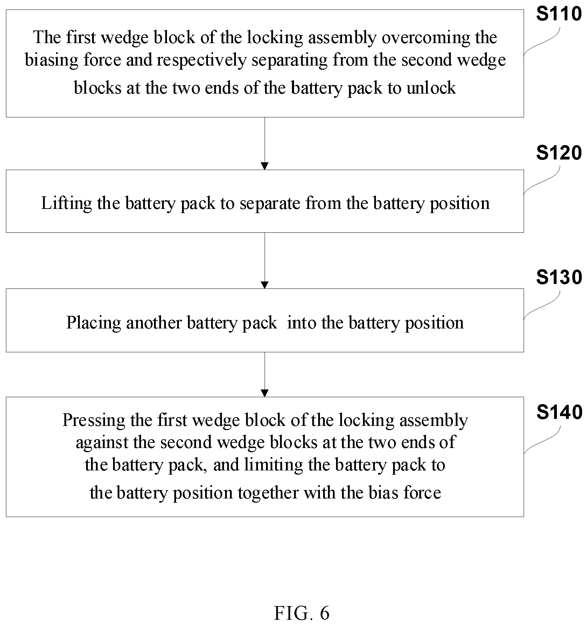

FIG. 6 is a flow chart of a method for locking a vehicle-mounted battery pack according to the present disclosure. As shown in FIG. 6, the vehicle-mounted battery pack locking method of the present disclosure is realized by the above-mentioned vehicle-mounted battery pack locking system and includes the following steps:

S100, limiting the battery pack 4 at the battery position 2 by a guide member (for example, a positioning guide rod) along a vertical direction.

S110, the first wedge block 31 of the locking assembly 3 overcoming the biasing force and respectively separating from the second wedge blocks 42 at the two ends of the battery pack 4 to unlock.

S120, lifting the battery pack 4 to separate from the battery position 2.

S130, placing another battery pack 4 into the battery position 2. and

S140, pressing the first wedge block 31 of the locking assembly 3 against the second wedge blocks 42 at the two ends of the battery pack 4, and limiting the battery pack 4 to the battery position 2 together with the bias force.

As shown in FIGS. 1-5, the main process of implementing the vehicle battery pack locking method of the present disclosure is as follows.

When the battery pack is unlocked, the cylinder 34 provides a thrust to overcome the elastic force of the spring 36, so that the first wedge block 31 and the second wedge block 42 are separated. The battery-swapping robot 5 lifts the battery pack 4 to separate from the battery position 2, then carries another fully-charged battery pack 4 into the battery position 2 and puts the battery pack 4 down. When the battery pack 4 falls into the battery position 2 on the vehicle base, the system recognizes the signal and sends a command to the cylinder 34 to operate. The movable wedge block 4 is pulled toward the cylinder, and the first wedge block 31 and the second wedge block 42 fit tightly. In this embodiment, when the wedge angle of the wedge surfaces is less than 4.5 degrees, the wedge surfaces are self-locked. In addition, the spring at the end maintains an elastic state, thereby realizing a double locking function. Assuming that the cylinder 34 fails and cannot provide a pulling force, under the action of the restoring force of the spring 36, the first wedge block 31 can still be firmly pressed against the second wedge block 42.

The vehicle-mounted battery pack locking method of the present disclosure can spatially lock the battery pack and provide double locking protection in the insertion direction of the battery pack, which can not only be unlocked quickly, but also provide a strong locking effect.

The present disclosure further provides a vehicle-mounted battery pack locking device including: a processor; a memory configured to store executable instructions of the processor. Wherein the processor is configured to execute the steps of the vehicle-mounted battery pack locking method by executing executable instructions.

As stated above, the vehicle-mounted battery pack locking method of the present disclosure can spatially lock the battery pack and provide double locking protection in the insertion direction of the battery pack, which can not only be unlocked quickly, but also provide a strong locking effect.

Those skilled in the art can understand that various aspects of the present disclosure can be implemented as a system, a method, or a program product. Therefore, various aspects of the present disclosure may be specifically implemented in the form of: a complete hardware implementation, a complete software implementation (including firmware, microcode, etc.), or a combination of hardware and software implementations, which may be collectively referred to herein as "circuit", "module" or "platform".

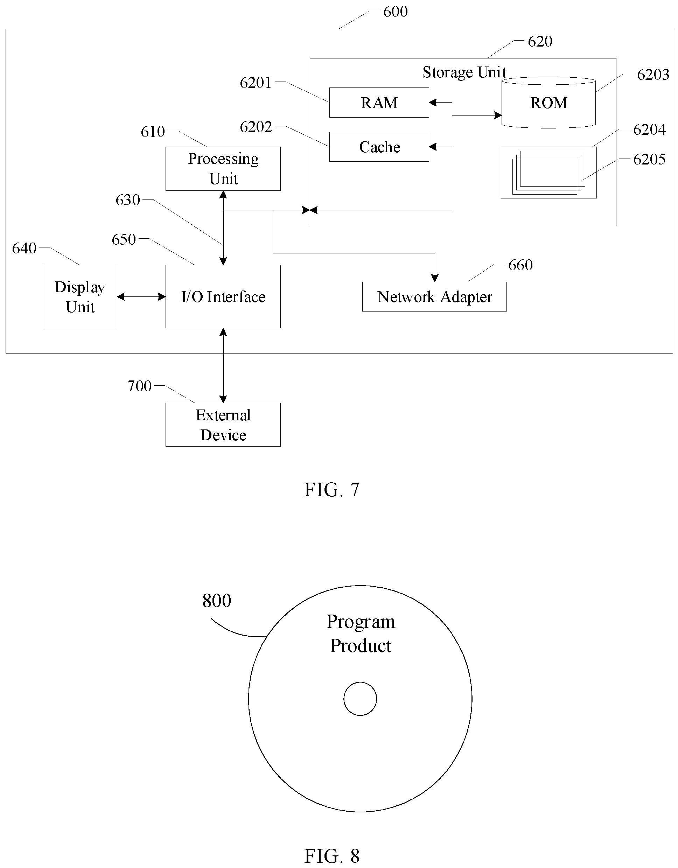

FIG. 7 is a structural schematic view of a vehicle-mounted battery pack locking device according to the embodiment of the present disclosure. The electronic device 600 according to this embodiment of the present disclosure will be described below with reference to FIG. 7. The electronic device 600 shown in FIG. 7 is only an example, and should not imply any limitation to the functions and usage scope of the embodiments of the present disclosure.

As shown in FIG. 7, the electronic device 600 is represented in the form of a general-purpose computing device. The components of the electronic device 600 may include, but are not limited to: at least one processing unit 610, at least one storage unit 620, and a bus 630 connecting different system components (including the storage unit 620 and the processing unit 610).

In an embodiment, the storage unit stores program codes which, when being executed by the processing unit 610, causes the processing unit 610 to implement steps of various exemplary embodiments described in the forgoing part describing the vehicle-mounted battery pack locking method of the description. For example, the processing unit 610 may be configured to perform, as shown in FIG. 6.

The storage unit 620 may include a readable medium in the form of a transitory storage unit, such as a random access storage unit (RAM) 6201 and/or a high-speed cache storage unit 6202, and may further include a read-only storage unit (ROM) 6203.

The storage unit 620 may further include a program/utility tool 6204 having a set of (at least one) program module 6205. Such program module 6205 includes, but not limited to, an operating system, one or more disclosure programs, other program modules, and program data. Each of these examples or some combination thereof may include an implementation of network environment.

The bus 630 may be one or more of several types of bus structures, including a storage unit bus or a storage unit controller, a peripheral bus, a graphics acceleration port, a processing unit, or a local area using any of a variety of bus structures bus.

The electronic device 600 may also communicate with one or more external devices 700 (e.g., keyboard, pointing device, Bluetooth device, etc.), and may also communicate with one or more devices that enable a user to interact with the electronic device 600, and/or any device (e.g., router, modem, etc.) that enables the electronic device 600 to communicate with one or more other computing devices. This communication can be performed through an input/output (I/O) interface 650. Moreover, the electronic device 600 can also communicate with one or more networks (e.g., local area network (LAN), wide area network (WAN), and/or a public network such as the Internet) through a network adapter 660. As shown in the drawing, the network adapter 660 communicates with other modules of the electronic device 600 through the bus 630. It should be understood that, although not shown in the drawing, other hardware and/or software modules may be used in conjunction with the electronic device 600, including but not limited to, microcode, device driver, redundant processing unit, external disk drive array, RAID system, tape driver and data backup storage system.

The embodiment of the present disclosure further provides a computer-readable storage medium on which a program product capable of implementing the above method of the disclosure is stored. In some possible implementation manners, various aspects of the present disclosure may also be implemented in the form of a program product, including program code which, when being executed by a terminal device, causes the terminal device to implement steps of various exemplary embodiments described in the forgoing vehicle-mounted battery pack locking method.

When the program in the computer-readable storage medium is executed, the point cloud information of LiDAR and the image information of camera can be fully utilized, and the shortcomings of existing technology that cannot combine a fast recognition speed and high accuracy can be overcome. The present disclosure realizes real-time 3D target detection with higher accuracy, and significantly improves the detection accuracy of small targets. The present disclosure increases the speed and accuracy of 3D target recognition, which helps to provide safer and more reliable environmental perception information for unmanned vehicles.

FIG. 8 is a structural schematic view of a computer-readable storage medium according to the embodiment of the present disclosure. Referring to FIG. 8, a program product 800 for implementing the above method according to an embodiment of the present disclosure is described. It may be implemented using a portable compact disk read-only memory (CD-ROM) and include a program code, and may be executed by a terminal device, for example, a personal computer. However, the program product of the present disclosure is not limited thereto. In the present disclosure, the readable storage medium may be any tangible medium containing or storing a program, which may be used by or in combination with an instruction execution system, apparatus, or device.

The program product may employ any combination of one or more readable medium. The readable medium may be a readable signal medium or a readable storage medium. The readable storage medium may be, for example but not limited to, an electrical, magnetic, optical, electromagnetic, infrared, or semiconductor system, apparatus, or device, or any combination thereof. More specific examples of readable storage medium (non-exhaustive list) may include: electrical connections with one or more wires, portable disks, hard disks, random access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

The computer-readable signal medium may include a data signal that is transmitted in baseband or as part of a carrier wave, in which readable program code is carried. This transmitted data signal can take many forms, including but not limited to electromagnetic signals, optical signals, or any suitable combination of the above. The readable signal medium may also be any readable medium other than a readable storage medium, and the readable medium may send, propagate, or transmit a program for use by or in combination with an instruction execution system, apparatus, or device. The program code contained on the readable medium may be transmitted using any appropriate medium, including but not limited to wireless, wired, optical fiber cable, RF, etc., or any suitable combination of the foregoing.

The program code for performing the operations of the present disclosure may be written in any combination of one or more programming languages, which may include a target-oriented programming language, such as the Java and C++, or may include conventional formula programming language, such as "C" language or similar programming language. The program code may be entirely executed on the user computing device, partly executed on the user device, executed as an independent software package, partly executed on the user computing device and partly executed on a remote computing device, or entirely executed on the remote computing device or server. In situations involving a remote computing device, the remote computing device may be connected to the user computing device through any kind of network, including a local area network (LAN) or a wide area network (WAN), or may be connected to an external computing device (e.g., through connection via the Internet using Internet service provider).

Above all, the purpose of the present disclosure is to provide a vehicle-mounted battery pack locking system, a method, a device, and a storage medium, that can spatially lock the battery pack and provide double locking protection in the insertion direction of the battery pack, unlock the battery quickly and provide strong locking effect.

The above is a detailed description of the present disclosure in connection with the specific preferred embodiments, and the specific embodiments of the present disclosure are not limited to the description. Modifications and substitutions can be made without departing from the scope of the present disclosure.

## Claims

1. A vehicle-mounted battery pack locking system comprising:
a battery swap passage for a battery pack to enter and exit a battery position of a battery swap vehicle along a first direction, wherein at least one second wedge block is provided at each of two ends of the battery pack, and a wedge-shaped slope of the second wedge block is configured to extend along the first direction; and
at least two locking assemblies respectively arranged at two ends of the battery position along the first direction, wherein each locking assembly at least includes one limit slider and a first wedge block, the limit slider is limited to be linearly movable only along the first direction, the first wedge block is connected to one side of the limit slider, the limit sliders at the two ends of the battery position are pushed toward the battery pack by a bias force, and a wedge-shaped slope of each first wedge block is respectively fitted and self-locked with the corresponding second wedge block, to bidirectionally limit the position of the battery pack along the first direction.

2. The vehicle-mounted battery pack locking system of claim 1, wherein a group of connecting rods arranged parallel to the first direction are provided at a bottom portion of the battery pack, and the second wedge blocks are respectively provided at two ends of each connecting rod, the slope of the second wedge block faces upward, and the slope of the first wedge block faces downward, the slope of the first wedge block is in surface contact with the slope of the second wedge block to fit together for self-locking, a locking force of the limit slider along the first direction is converted into a downward pressure that presses the battery pack against a bottom plate of the battery position, so that the battery pack is limited to the battery position between the second wedge blocks at the two ends of the battery position, and the first direction is a width direction of the battery swap vehicle.

3. The vehicle-mounted battery pack locking system of claim 2, wherein the locking assembly further includes linear limit assemblies respectively arranged on the locking assemblies and a vehicle body of the battery swap vehicle.

4. The vehicle-mounted battery pack locking system of claim 3, wherein the linear limit assembly includes a dovetail groove arranged at a bottom portion of the limit slider and a dovetail tenon fixed at the battery position in the vehicle body, and the dovetail groove is slidable in the dovetail tenon along the first direction.

5. The vehicle-mounted battery pack locking system of claim 2, wherein the locking assembly further includes a cylinder configured to drive the limit slider to move along the first direction through a cylinder rod.

6. The vehicle-mounted battery pack locking system of claim 5, wherein the locking assembly further includes a spring configured to push the limit slider toward the second wedge block of the battery pack, wherein the spring and the cylinder are respectively arranged on two sides of the limit slider along the first direction.

7. The vehicle-mounted battery pack locking system of claim 6, wherein when the cylinder overcomes a thrust of the spring and pushes the limit slider away from the second wedge block, the battery position is in an unlocked state for inserting or removing the battery pack.

8. The vehicle-mounted battery pack locking system of claim 6, wherein when the cylinder pulls the limit slider toward the second wedge block, the cylinder and the spring together provide a combined force to limit the battery pack.

9. The vehicle-mounted battery pack locking system of claim 2, wherein the limit sliders are respectively located on outer sides of the connecting rods, the first wedge blocks are respectively located on inner sides of the limit sliders, and moving strokes of the first wedge blocks are respectively located on extension lines of the two ends of the connecting rods.

10. A vehicle-mounted battery pack locking method realized by the vehicle-mounted battery pack locking system of claim 1, wherein the method comprises:
limiting the battery pack to the battery position by a guide member extending along a vertical direction;
the first wedge blocks of the locking assemblies overcoming the bias force and respectively separating from the second wedge blocks at the two ends of the battery pack to unlock the battery pack;
lifting the battery pack to separate from the battery position;
placing another battery pack into the battery position; and
pressing the first wedge blocks of the locking assemblies against the second wedge blocks at the two ends of the battery pack, and limiting the battery pack to the battery position together with the bias force.

11. A vehicle-mounted battery pack locking device comprising:
a processor;
a memory configured to store executable instructions of the processor;
wherein the processor is configured to execute the steps of the vehicle-mounted battery pack locking method of claim 10 by executing the executable instructions.

12. A computer-readable storage medium used for storing program, wherein the vehicle-mounted battery pack locking method of claim 10 is realized when the program is executed by a processor.
